# EUROPEAN PATENT SPECIFICATION

(11) **EP 1 398 904 B1**
(45) Date of publication and mention of the grant of the patent: **15.02.2006**
(21) Application number: 02388063.6
(22) Date of filing: 16.09.2002
(51) Int. Cl.: H04L 9/32, G07F 7/10

(54) **Secure factory process**
Gesichertes Herstellungsverfahren
Procédé de production sécurisé

(43) Date of publication of application: 17.03.2004
(73) Proprietor: TELEFONAKTIEBOLAGET LM ERICSSON (publ), 164 83 Stockholm (SE)
(72) Inventor: Bodensjö, Marcus, 213 74 Malmö (SE); Schalin, Patrik, 222 41 Lund (SE); Osthoff, Harro, 90411 Nürnberg (DE); Smeets, Bernard, 240 10 Dalby (SE)
(74) Representative: Boesen, Johnny Peder

(56) References cited:
- US-A1- 2002 050 528

## Description

This invention relates to the production of electronic devices. More particularly, the invention relates to the production of an electronic device comprising a data memory for storing data items and a key memory for storing at least one cryptographic key of a cryptographic public key mechanism.

Many modern electronic devices, such as mobile terminals, comprise memory for loading software and/or data for use with the electronic device. Typically, a manufacturer of such electronic devices delivers the device with or without some preinstalled software and/or data to a customer who further customises the electronic device prior to delivering the device to an end-user.

Consequently, during production of the electronic device in a factory software and/or data is loaded into the device, such as test software, pre-installed software to be delivered with the device, or the like. Furthermore, after production of the electronic device, further software and/or data is loaded by the customer, such as customer-specific software, e.g. for providing customer-specific services, etc.

Throughout this document, the term customer comprises any entity which receives the produced electronic device. Typically, a customer is another enterprise or company which customises the electronic device, incorporates it into other electronic equipment, and/or sells it via corresponding distribution channels to end-users. For example, the electronic device may be a board to be incorporated into a mobile phone by a phone manufacturer. In this example, the customer of the electronic device is the phone manufacturer.

In the following, the electronic device delivered to the customer from the factory will be referred to as the product, in contrast to the electronic device during production in the factory.

US 2002/0050528 discloses a manufacturing process and a personalisation process for a multi-application IC card that allow a subsequent selective loading/deletion of programs on the IC card.

US patent no. 6,167,521 discloses a method of loading new code into a logical subregion of a device which is controlled by an authority. According to this prior art method, the authority prepares a message comprising the new code and certain parameters which specify requirements on the execution environment for the new code to run. The authority sends the generated message to the device which, upon receipt of the message, performs an authentication of the authority and verifies whether the parameters are valid for the current execution environment. If yes, the device loads the received new code into the corresponding logical subregion.

However, the above prior art method does not address the problem that, for security reasons, when producing electronic devices it is desired to separate production and subsequent customer-specific customisation. For example, the manufacturer of a board to be incorporated into a mobile phone may wish to limit the possibilities of a customer of that board, e.g. a phone manufacturer, to customise the product, i.e. the board. Furthermore, a customer may not wish any customer-specific product software which the customer may have loaded into the device, i.e. the board, to be available for other parties, e.g. other phone manufacturers which are customers of the manufacturer of the board.

Hence, the tools used for loading software in the factory should not work with the product once it has left the factory and, vice versa, the tools used in connection with the product outside the factory should not be used during production inside the factory.

It is known to secure such loading tools by physical hardware devices, such as hardlocks, smart cards, dongles, or the like. According to such prior art solutions, a loading tool only allows operation, if a corresponding external device is connected to the loading tool, e.g. a smart card inserted in or a dongle connected to a predetermined port of the tool, etc.

However, the use of such physical devices has a number of problems: The handling and control of such devices generates a lot of overhead, as they have to be inserted and removed from the loading tools, stored in a secure place, etc.

Furthermore, these devices are typically small and may, therefore, easily get lost or even stolen, thereby posing a security risk.

Furthermore, modern electronic devices often have rather short life cycles. Consequently, a considerable number of different versions of electronic equipment and/or the corresponding software and/or the corresponding loading tools may exist, in many cases even simultaneously. Hence, as the tools get more complicated they may depend on different versions of the physical devices, thereby increasing the complexity of version handling and maintenance of the loading tools and the physical devices.

The above and other problems are solved when a method of producing an electronic device comprising a data memory for storing data items and a key memory for storing at least one cryptographic key of a cryptographic public key mechanism, the method comprising
- loading a factory public key into the key memory;
- loading factory software signed with a factory private key corresponding to the factory public key into the data memory

is characterised in
that the method further comprises
- loading into the key memory a product public key different from the factory public key for verifying subsequent data items to be loaded into the data memory after delivering the electronic device to a customer, the subsequent data items being signed with a corresponding product private key; and
- disabling the factory public key prior to delivering the electronic device to the customer.

Consequently, a division between tools used in the factory and the tools used with the product outside the factory is achieved by using a special factory cryptographic key and a product cryptographic key. All software loaded in the factory is signed with a corresponding factory private key and all software loaded into the electronic device outside the factory is signed with a product private key. According to the invention, the factory public key is disabled at the end of the production, thereby ensuring that factory software signed with the factory private key cannot be loaded into the product outside the factory any longer. Likewise, any software signed with the product private key will be rejected during production in the factory.

It is an advantage of the invention that the use of different keys for production of an electronic device and for the resulting product electronic device ensures that production software can only be loaded during production and product software can only be loaded into the finished product. Consequently, the signed software used in production does not need to be protected further, since it cannot be used outside the factory, thereby greatly simplifying the handling and control of the production software in the factory.

It is a further advantage of the invention that no extra tools are required to differentiate security relevant load steps in the factory and outside the factory, thereby simplifying the control and maintenance of load tools.

It is a further advantage of the invention that it provides a simple key structure, thereby avoiding the need of maintaining and storing a complicated key structure in the electronic device. This is especially advantageous when the electronic device has limited storage and/or processing resources, as is the case for mobile terminals and the like.

Within the field of cryptography, the use of combined public and private keys as such is known as public-key or asymmetric cryptography. A system for using public keys is called a public key infrastructure (PKI). The very nature of public-key cryptography permits a form of digital message signing. A sender may publish a decryption key, i.e. the public key, and keeps a corresponding encryption key, i.e. the private key, secret. When the sender encrypts a message or a value derived from the message, anyone can decrypt it using the public decrypting key and, in doing so, the recipient can be sure that the message could only have been encrypted by the sender, since the sender is the sole possessor of the encryption key. Hence, the sender has effectively "signed" the message. Examples of public-key mechanisms include the RSA Cryptosystem (see e.g. Rivest, R., Shamir, A. and Adleman, L. "A method for obtaining digital signatures and public key cryptosystems." Communications of the ACM, 21 (1978), pp. 120-126) the ElGamal Cryptosystem (see e.g. ElGamal, T. "A public key cryptosystem and a signature scheme based on discrete logarithms." IEEE Transactions on Information Theory, 31 (1985), pp. 469-472) and elliptic curve cryptosystems (see e.g. Saeki, M., Elliptic Curve Cryptosystems. M.Sc. Thesis, McGill University School of Computer Science. 1996.).

When the factory keys or the product keys are indicative of a predetermined entity, e.g. a manufacturer, it is ensured that one entity cannot load software/data into an electronic device related to another entity, e.g. another manufacturer's device.

When the method further comprises the step of setting a permanent identifier in the electronic device indicative of a completion of a production process, a mechanism is provided for securely determining whether a given device has completed a predetermined stage of the production process. For example, setting the permanent identifier may indicate the end of the production process in the factory. Since the identifier is permanently set, it can be ensured that the device does not re-enter the factory process once it has left it. Preferably, the permanent identifier identifies the manufacturer, thereby ensuring that a manufacturer cannot load another manufacturer's software/data, even if the cryptographic keys have been modified.

In a preferred embodiment, the step of loading the factory public key comprises the steps of
- detecting whether the permanent identifier is set;
- if the permanent identifier is set, aborting the step of loading the factory public key; otherwise loading the factory public key.

Hence, the tools used during the factory process which sign any data to be loaded into the device with the factory private key can only be used during the production process. Once the factory public key is disabled in the device and the permanent identifier is set, a re-loading of the factory public key is prevented, thereby increasing the security of the method. Hence, it is an advantage that the permanent identifier protects against removal of keys from non-volatile memory of the electronic device.

In a further preferred embodiment, the step of loading the product public key comprises the steps of
- detecting whether the permanent identifier is set;
- if the permanent identifier is set, loading the product public key; otherwise aborting the step of loading the product public key.

Hence, the product public key cannot be loaded before completion of the production process as indicated by setting of the permanent identifier, thereby preventing the use of post-production tools during the production process. By enforcing a strict division between production tools and post-production tools, the risk of misuse or erroneous use of tools is further reduced.

Alternatively, the permanent ID may be loaded at other stages of the production process, for example as an initial step of the process before loading the factory public key, or as a final step after exchanging the factory public key with the product public key, or as an intermediate step after loading the factory public key but before loading any factory software, or at another suitable stage of the production process.

The permanent identifier may be any identifier which may be set in the device and which cannot - with reasonable effort - be changed or erased, once it is set. Preferably, the identifier uniquely identifies the device. Examples of such a permanent identifier include but are not limited to fuses burnt electrically, by means of a laser, or the like, charge memory, encapsulated permanent capacitors, one-time-programmable (OTP) memory, etc., or a combination thereof. In one embodiment, the permanent identifier may be related to the product public key. For example, the product public key may be stored in OTP memory, thereby functioning both as the product public key and the permanent identifier.

In a preferred embodiment the electronic device is a mobile telephone having associated with it an International Mobile Equipment Identity; and the permanent identifier comprises the International Mobile Equipment Identity and a further identifier stored in a one time programmable arrangement. Hence a high level of security is provided and the device is uniquely identified. Furthermore, the part of the identifier stored in the OTP memory may have a small size, e.g. 64 bits or less, thereby reducing the cost for the required OTP memory.

The term International Mobile Equipment Identity (IMEI) refers to a unique number given to every mobile telephone. IMEI numbers of cellular phones connected to a GSM network are stored in a database (EIR - Equipment Identity Register) containing all valid mobile phone equipment. When a phone is reported stolen or is not type approved, the number is marked invalid. The number comprises a type approval code (TAC), a country code, an assembly code, a manufacturer identifier, and a serial number.

It is an advantage of the invention that the factory private key is only known to the manufacturer of the electronic device, thereby ensuring that other manufacturers cannot load their software into these devices.

The term electronic device comprises any device comprising processing means and a memory. The term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

Examples of such electronic devices include computers, such as stationary and portable PCs, stationary and portable radio communications equipment, etc., and components thereof. The term portable radio communications equipment includes mobile radio terminals such as mobile telephones, pagers, communicators, e.g. electronic organisers, smart phones, personal digital assistants (PDAs), or the like.

In a preferred embodiment, the data memory and the key memory comprise selected blocks of a flash memory. Flash memory (sometimes also called "flash RAM") is a type of nonvolatile memory that can be erased and reprogrammed in units of memory called blocks. It is a variation of electrically erasable programmable read-only memory (EEPROM) which, unlike flash memory, is erased and rewritten at the byte level, which is slower than flash memory updating. Flash memory is often used to hold control code such as the basic input/output system (BIOS) in a personal computer. When data needs to be changed (rewritten) in flash memory, the flash memory can be written to in block (rather than byte) sizes, making it easy to update. Flash memory gets its name because the microchip is organized so that a section of memory cells are erased in a single action or "flash." Flash memory is widely used in digital cellular phones, digital cameras, LAN switches, PC cards for notebook computers, digital set-up boxes, embedded controllers, and other electronic devices.

Other examples of data memory and/or key memory include magnetic tape, optical disc, digital video disk (DVD), compact disc (CD or CD-ROM), mini-disc, hard disk, floppy disk, ferro-electric memory, electrically erasable programmable read only memory (EEPROM), EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

The term factory software comprises any computer-executable instructions loaded into the electronic device during production. The factory software may be executed during production, e.g. for testing of hardware components, calibration of components, e.g. the radio circuit of a mobile telephone, setting of parameters, customisation, etc. Alternatively or additionally, the factory software may comprise instructions to be executed after completion of the production, e.g. pre-installed operating systems, etc. Hence, the factory software may be loaded permanently or temporarily into the electronic device.

The factory public key may be disabled by removing the key from memory, e.g. by setting all corresponding bits to zero, it may be disabled by corrupting it, e.g. by altering one or more bits of the stored key, or it may be disabled in any other suitable way, thereby preventing its subsequent use for verifying signed data items. Preferably, the factory public key is permanently disabled, i.e. making it computationally infeasible to reconstruct the key, thereby increasing the security of the method. In one embodiment, both the factory public key and the product public key are stored in the beginning of the factory process, and the factory public key is disabled at the end of the factory process, thereby only leaving the product public key enabled.

When there is a subsequent need for re-customisation of a device after completion of the production process, access to some or all of the production tools may be granted. However, when granting access to factory tools after completion of the production process, it is a general problem to maintain the security of the system.

This problem is solved when the method further comprises the step of loading a hash value of a secret data item into the key memory. Consequently, a re-customisation tool, preferably different and separate from the factory tools, may be provided, where the re-customisation tool knows the secret data item. Hence, a re-customisation of the device may be performed in a controlled environment while maintaining the security of the system and the distinction between production and post-production processes/tools.

A re-customisation may, for example, comprise changing language settings, country-specific settings, or the like. Hence, a re-customisation may, for example, be necessary when the customer wishes to deliver the device, e.g. as a part of another electronic equipment, to end-users of a different country, market, etc.

Here, the term hash value refers to a one-way representation of the secret data item, i.e. a representation in which it is computationally infeasible to deduce the secret data item from the representation and where two different secret data items yield two different representations.

During the development of new electronic devices it is common to initially produce a number of prototypes, for example to allow third party providers to test software in connection with a new device. In such a situation it is desirable that the prototypes are also covered by the security mechanisms of the production process. However, it is usually not desired that the subsequent product tools used for the actually released products are also usable for the prototypes.

Consequently, in a preferred embodiment the step of loading a product public key further comprises the step of loading a digital certificate comprising the product public key, the digital certificate being associated with a validity period limiting the validity of the public key, thereby limiting the validity of the prototype key to a predetermined validity period.

In another preferred embodiment, the step of loading a product public key further comprises the step of loading a digital certificate comprising the product public key; and the method further comprises the step of subsequently invalidating the digital certificate by sending a predetermined message to the electronic equipment. Hence, it is an advantage that no validity period needs to be predefined, thereby it is possible to easily account for delays in the development and testing process of the prototypes. The message sent to the device may, for example, be a message of a Short Message Service (SMS) or another message service, or another secured indication to achieve deactivation via an over-the-air transport mechanism.

In another embodiment, the product public key is selected from a predetermined set of customer public keys, thereby providing a mechanisms for differentiating different products, products from prototypes, and/or different customers.

The present invention can be implemented in different ways including the methods described above and in the following, systems described in the following, and further product means, each yielding one or more of the benefits and advantages described in connection with the first-mentioned method, and each having one or more preferred embodiments corresponding to the preferred embodiments described in connection with the first-mentioned method and disclosed in the dependant claims.

It is noted that the features of the methods described above and in the following may be implemented in software and carried out in a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

The invention further relates to a method of loading data into an electronic device produced according to the method described above and in the following, the method comprising the steps of
- detecting whether the permanent identifier is set; and
- if the permanent identifier is set, loading the data, the data being signed with the product private key; otherwise aborting loading the data.

The invention further relates to a method of re-customising an electronic device produced according to the method described above and in the following, the method comprising the steps of
- detecting whether the permanent identifier is set;
- obtaining the hash value of the secret data item from the key memory;
- comparing the obtained hash value with a reference hash value calculated from a reference secret data item; and
- if the permanent identifier is set and if the obtained hash value corresponds to the calculated reference hash value, initiating loading re-customisation data signed with the product private key into the electronic device; otherwise aborting re-customising the electronic device.

The invention further relates to a system for producing an electronic device, the electronic device comprising a data memory for storing data items and a key memory for storing at least one cryptographic key of a cryptographic public key mechanism, the system comprising
- a first loader module for loading a factory public key into the key memory;
- a second loader module for loading factory software signed with a factory private key corresponding to the factory public key into the data memory;
- a third loader module adapted to load into the key memory a product public key different from the factory public key for verifying subsequent data items to be loaded into the data memory after delivering the electronic device to a customer, the subsequent data items being signed with a corresponding product private key; and to disable the factory public key prior to delivering the electronic device to the customer.

The term loader module comprises any device or circuitry adapted to load data and/or software into the electronic device. The device may comprise a suitably programmed processor and an interface for loading the data/software onto the electronic device. Furthermore, the loader module may be implemented as a computer program or a component of a computer program adapted to be executed on a data processing system having communication circuitry adapted to communicate with the electronic device via a data communications link.

The invention further relates to a system for loading data into an electronic device produced according to the method described above and in the following, the system comprising a loader module adapted to
- detect whether the permanent identifier is set; and
- if the permanent identifier is set, to load the data, the data being signed with the product private key; otherwise to abort loading the data.

The invention further relates to a system for re-customising an electronic device produced according to the method described above and in the following, the system comprising a loader module adapted
- to detect whether the permanent identifier is set;
- to obtain the hash value of the secret data item from the key memory;
- to compare the obtained hash value with a reference hash value calculated from a reference secret data item; and
- if the permanent identifier is set and if the obtained hash value corresponds to the calculated reference hash value, to initiate loading re-customisation data signed with the product private key into the electronic device; otherwise to abort re-customising the electronic device.

The invention further relates to an electronic device produced according to the method described above and in the following.

The invention further relates to a computer program comprising code means adapted to perform the following steps in a method of producing an electronic device including a data memory for storing data items and a key memory for storing at least one cryptographic key of a cryptographic public key mechanism:
- loading into the key memory a product public key for verifying subsequent data items to be loaded into the data memory after delivering the electronic device to a customer, the subsequent data items being signed with a corresponding product private key; the product public key being different from a factory public key stored in the key memory and used for verifying any factory software to be loaded into the data memory and signed with a factory private key corresponding to the factory public key; and
- disabling the factory public key prior to delivering the electronic device to the customer.

The computer program may be embodied on a computer-readable medium such as magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA card, etc.

The invention will be explained more fully below in connection with a preferred embodiment and with reference to the drawing, in which:
fig. 1 schematically illustrates a production process and a re-customisation process according to an embodiment of the invention;
fig. 2 shows a block diagram of a system for loading data into an electronic device;
fig. 3 shows a block diagram of an example of an electronic device;
fig. 4 shows a block diagram of a system for loading software and data into an electronic device and for customising an electronic device during the production process;
figs. 5a-b show block diagrams of embodiments of a system for re-customising an electronic device;
fig. 6 shows a block diagram of a system for managing cryptographic keys and certificates; and
figs. 7a-d illustrate examples of production processes according to corresponding embodiments of the invention.

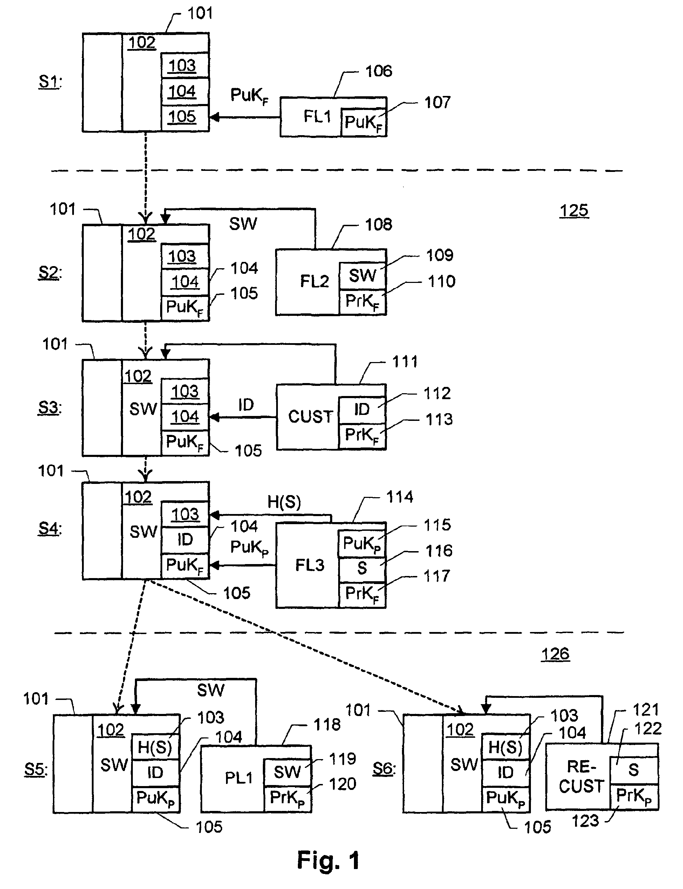

Fig. 1 schematically illustrates a production process and a re-customisation process according to an embodiment of the invention. In an initial step S1 of the production process an electronic device 101 is provided. In this embodiment, it is assumed that the electronic device includes a mounted board, i.e. during the production of a product for a customer, the described process may typically take place after completion of the surface mounting of electronic components on a board and before or during a final assembly step. The electronic device comprises a memory 102 including memory sections 103, 104 and 105. The memory 102 may include one or more different types of memory and/or one or more memory modules, such as EEPROM, Flash memory, on-chip memory, RAM, OTP memory, etc. The memory sections 103 and 105 may be addressable areas of a memory, such as flash memory. In a preferred embodiment, the memory section 104 is a OTP memory.

During a first loading step a first factory loading tool 106 is used to load a factory public key PuK_{F} into memory section 105. The loading tool 106 comprises memory 107 for storing the public key PuK_{F}.

Preferably, the public key is related to a digital certificate of the manufacturer. Here the term digital certificate refers to a data item that serves to validate the sender's authorization. The data item comprises an identification of the certificate holder and the holder's public key and, preferably, a digital signature of a certification authority for authentication. The certification authority attests that the sender's identifier is the one associated with the public key in the data item. In the art, different types of public key certificates are known as parts of a public key infrastructure that deals with digitally signed documents, public key encryption, trusted third parties, and mechanisms for certificate publication and issuing, see e.g. the X509 standard (ITU-T Recommendation X.509 (1997), "Information Technology - Open Systems Interconnection - The Directory: Authentication Framework"). Hence, in the following, the public key PuK_{F} will also be referred to as the factory certificate.

Preferably, prior to loading the factory certificate, the loading tool 106 attempts to read a valid factory certificate or a corresponding customer certificate, which will be described below, from memory section 105 and a predetermined product ID from the OTP memory section 104. If no valid certificate can be read from memory section 105 and no product ID can be read from OTP section 104, the loading tool loads the public key PuK_{F}, thereby ensuring that the electronic device has not previously undergone the factory process.

The loading tool 106 may further be used for other settings such as the downloading of calibration data, the setting of secure data areas by calculating a cryptographic hash over the area, or the like.

Once the factory certificate is successfully loaded, the electronic device 101 enters the secured factory production process 125.

It is noted that the step of loading the factory certificate may be performed in a pre-flash step prior to mounting the flash memory onto the main board of the electronic device.

During step S2 of the secure factory process 125, the electronic device 101 is tested and, if necessary, tuned, calibrated, or the like. For example, during production of a mobile telephone, the radio components may require tuning and calibration, the mounted electronic components may need to be tested, etc. For this purpose, factory software for testing, calibration, etc. is loaded into the memory 102 of the electronic device 101. The factory loading tool 108 for loading the factory software comprises memory 109 and 110 for storing the factory software and a factory private key PrK_{F}, respectively. The factory private key PrK_{F} corresponds to the factory public key PuK_{F} and is used by the loader 108 to sign the factory software prior to loading the factory software into the electronic device 101.

Before the loading tool 108 loads the signed factory software into the electronic device 101, the tool 108 attempts to read a predetermined product ID from the OTP section 104 of the electronic device. If no product ID can be read from OTP section 104, the loading tool 108 loads the factory software, thereby ensuring that the electronic device has not previously undergone the factory process. Furthermore, the factory software is only accepted for loading and execution by the electronic device, if the electronic device successfully verifies the received software using the factory certificate PuK_{F}. Additionally or alternatively, other software and/or data may be loaded into the electronic device at this stage, for example an operating system and/or application software for use with the final product. The loading of this other software and/or data is performed as described above by loading tool 108 or a separate loading tool (not shown), where the software and/or data to be loaded is signed with the factory private key PrK_{F}.

After successful testing of the electronic components, loading of application software, or the like, during step S3 the electronic device is customised, i.e. is given a specific "identity". For example, this customisation step may be performed after the final physical assembly of the electronic device. During this step, software customisations are performed, such as loading of customer-specific software, country adaptations, etc. Furthermore, in the context of mobile terminals a number of known codes may be loaded, such as a SIMunlock code, and IMEI, a customer code, etc. A customisation tool 111 performs the above customisation, e.g. by loading software and/or data, such as codes, and/or by performing other settings in the electronic device. According to the invention, the customisation loader signs any data or software to be loaded into the electronic device with the factory private key PrK_{F} stored in a section 117 of the memory of the customisation tool. Furthermore, prior to performing the above customisations, the customisation tool 111 verifies that no ID is set in the OTP memory section 104 of the electronic device. Hence, as described in connection with the previous step S2, a customisation by customisation tool 111 requires that the electronic device has a valid factory certificate stored in memory section 105 and that no ID is set in OTP section 104. In a preferred embodiment the electronic device has associated with it an IMEI and the permanent ID is a combination of the IMEI and a product ID stored in OTP memory. As an IMEI may comprise approx. 15 characters, a combination of the IMEI with a short OTP product ID, e.g. a 16 bit ID, provides a unique identification of the device and, at the same time, is protected against removal. Furthermore, as only the product ID is stored in OTP memory, the OTP memory usage of this embodiment is small.

Furthermore, during customisation step S3, a non-removable ID 112 is set in OTP memory section 104 of the electronic device. The loading of the ID indicates the completion of the secure production process. Since the previous loaders 106, 108, and 111 all require that no ID is set in the OTP section 104, it is ensured that the above factory tools cannot be applied to a device which has completed the production process.

At the end of the factory production process, a final loading step S4 is performed by a loading tool 114. The loading tool 114 verifies that a valid ID is set in the OTP section 104, thereby ensuring that the electronic device has completed the production process. The loader 114 loads a hash value of a secret value S into a memory section 103 of the electronic device. Preferably, the size of the hash value is at least 64 bits in order to ensure a suitable security. With current and none-distant state-of-the-art cryptoanalysis tools, 128 bits may be used. The hash value allows a subsequent secure re-customisation of the electronic device without re-entering the above secure production process. The loading tool may retrieve the secret value S from a memory section 116 of the loading tool 114 and calculate the corresponding hash value. Alternatively, the loading tool 114 may retrieve the secret value or the calculated hash value from another computer. Preferably, the hash value is signed with the factory private key PrK_{F}. Finally, the loader 114 loads a product public key PuK_{P}. into the memory section 105 of the electronic device, thereby disabling the previous factory certificate PuK_{F}. Alternatively, the product public key may be loaded into a different memory section and the factory certificate may be disabled, e.g. by setting all or a predetermined subsets of its bits to zero.

Hence after completion of the production process, the electronic device includes application software in its memory 102, a non-removable ID in the OTP section 104, a hash value H(S) of a secret, and a product public key PuK_{P}.

At this stage, in step S5, additional software and/or data 119 may be loaded into the electronic device using a product loading tool 118 having stored a product private key PrK_{P} (120) corresponding to the product public key PuK_{P}. Hence, authorised product software/data signed with the product private key PrK_{P} is accepted by the electronic device. However, at this stage, any software/data signed with the factory private key PrK_{F} will be rejected by the electronic device. Consequently, a strict division of the production process 125 and the post-production process 126 is enforced, thereby ensuring that factory software or application software cannot be loaded by an unauthorised entity into an electronic device.

However, it may be necessary to re-customise some of the settings performed during the production process or to perform other kinds of re-work, such as re-loading calibration software, or the like. Within the above described mechanism, the factory public key PuK_{F} cannot be re-loaded, since the loader 106 requires that no OTP ID is set in memory section 104 of the electronic device. Furthermore, allowing such a re-loading of the factory public key would involve the risk of misuse.

According to the invention, a re-customisation may be performed using a special re-customisation tool 121 which has access to the secret S (122) and the product private key PrK_{P} (123). The re-customisation tool verifies that a valid ID is set in OTP section 104. Furthermore, the re-customisation requires that a hash value calculated from the secret S in the customisation tool corresponds to the hash value H(S) stored in the electronic device. This may be verified by the customisation tool or by the electronic device. Finally, any data/software sent to the electronic device during re-customisation is signed with the product private key PrK_{P}, thereby providing a secure re-customisation process which avoids a re-entering into the secure factory process 125, thereby enforcing a strict division between production process and post-production process.

The above public and private keys may be keys of any suitable public key mechanism, such as RSA or Elliptic Curve Cryptography (ECC). The mechanism for the factory and the private keys may be the same or different mechanisms.

Furthermore, it is understood, that the data/software loaded into the electronic device may be signed by the respective loading and customisation tools 108, 111, 114, 118, or 121, or it may be signed by a remote computer and the signed data/software may be communicated to the corresponding loading or customisation tool which performs the actual loading.

It is understood that the software and/or data may be compressed before loading it into the electronic device in order to reduce the loading time. Furthermore, it is understood that the software and/or data may be encrypted using a suitable private or public key encryption mechanism, thereby further increasing the security of the production process.

The loading and customisation tools may be special hardware devices or circuits, or they may be implemented as computer programs executed on a data processing system, such as a standard PC, or they may be implemented as a combination thereof. Hence, within this document, the terms loading station and loading tool are used interchangeably. Furthermore, the cryptographic keys of the loading and customisation tools may be stored on a corresponding removable medium, such as a CD ROM, a smart card, etc. For example, the keys and the cryptographic signing software may be implemented on a smart card which may be removably inserted in the loading tool.

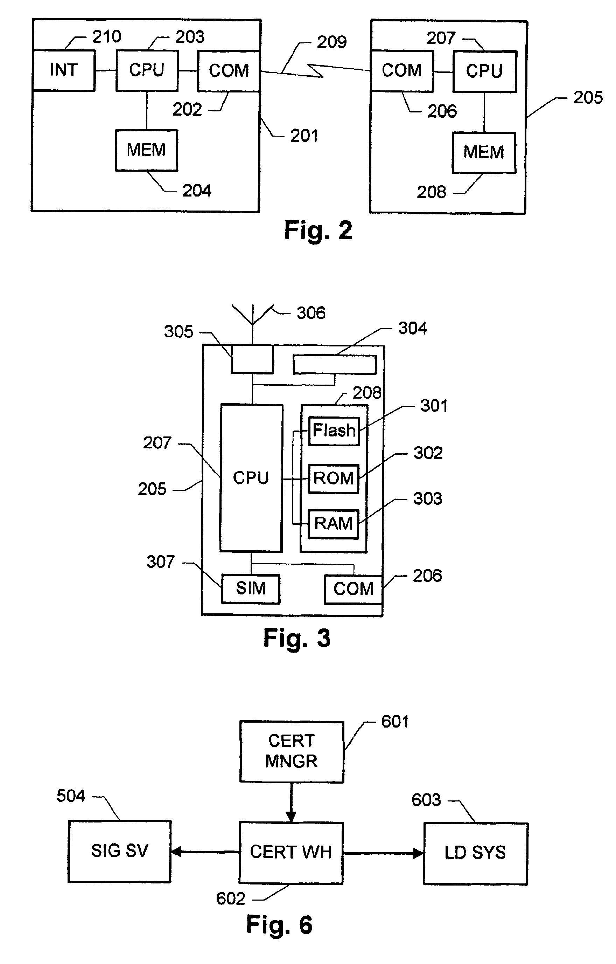

It is understood that several modifications of the above process are possible within the scope of the invention. For example, some of the above tools may be combined in a single tool or the division of functions of the tools may be divided between the different tools in a different manner. For example tools 108 and 111 may be combined to one tool or the tools 111 and 114 may be combined to a single tool. Furthermore, some of the loading steps may be performed in a different order. For example, the hash value H(S) may be loaded during a previous loading step, e.g. by customisation tool 111. Fig. 2 shows a block diagram of a system for loading data into an electronic device. The system comprises a loading station 201 and an electronic device 205. The loading station comprises a storage medium 204 for storing the payload data to be loaded into the electronic device and other data for use in the processing of the payload data, such as cryptographic keys, address information, etc. The loading station further comprises a processing unit 203 which is adapted, e.g. by software loaded from the storage medium 204, to process the payload data, e.g. compress and/or encrypt the payload data and/or divide it into smaller segments, generate header data, etc. Furthermore, the processing unit is adapted to control the transmission of the data to the mobile station 205. The processing unit 203 may comprise a general- or special-purpose programmable microprocessor, Digital Signal Processor (DSP), Application Specific Integrated Circuit (ASIC), Programmable Logic Array (PLA), Field Programmable Gate Array (FPGA), etc., or a combination thereof. The loading station further comprises a communications unit 202 comprising circuitry and/or devices suitable for enabling the loading station to communicate data with the electronic device via a wired or wireless communications link 209 such as a direct data link, a communications network, or the like. Examples of such communications units include a network interface, a network card, a radio transmitter/receiver, a Bluetooth transceiver, a serial port, a parallel port, an infrared port, an IrDa port, a cable modem, a telephone modem, an Integrated Services Digital Network (ISDN) adapter, a Digital Subscriber Line (DSL) adapter, a satellite transceiver, an Ethernet adapter, or the like. Accordingly, the communications link 209 may be a short-range wireless communications link using electromagnetic waves. Examples of such communications links include a Bluetooth connection or another connection based on radio frequencies, infrared, microwave, or the like. The communications link may further be a wired connection, e.g. a serial connection, and USB connection, or the like. In yet another embodiment, the connection may be established via a communications network, such as a local area network, a cellular network, the Internet, or the like. The loading station 201 further comprises an interface 210 comprising circuitry and/or devices suitable for enabling the loading station to communicate data with another data processing system. Examples of such interfaces include the examples mentioned in connection with the communications unit 202 above. Further examples include a floppy disk drive, a CD drive, or the like, or any other suitable circuitry or device enabling the loading station to receive payload data to be loaded into the loading station, loading tools or other software to be executed by the loading station, cryptographic data, etc. These data and software may be received via a communications network, e.g. the Internet, or on a storage medium, such as a CD, a floppy disk, a memory card, or the like. The data may be received from one or more servers as will be described below. The received data or software is stored on the storage medium 204, possibly after a verification process and/or further processing. The loading station may be a conventional, suitably programmed computer, e.g. a PC, comprising a suitable communications interface.

The electronic device 205 comprises a corresponding communications unit 206 comprising circuitry and/or devices suitable for enabling the electronic device to communicate data with the loading station. The electronic device further comprises a processing unit 207, e.g. a general- or special-purpose programmable microprocessor, Digital Signal Processor (DSP), Application Specific Integrated Circuit (ASIC), Programmable Logic Array (PLA), Field Programmable Gate Array (FPGA), etc., or a combination thereof. The processing unit 207 is adapted, e.g. by software loaded from the storage medium 208 of the electronic device, to receive data from the loading station, to analyse and verify any header information, and to load the actual payload data into the storage medium 108. If applicable, the processing unit 107 is further adapted to process the payload data, e.g. uncompress or decrypt it.

Fig. 3 shows a block diagram of an example of an electronic device. The electronic device 205 comprises a processing unit 207, as described above, for controlling the functions of the electronic device. The electronic device further comprises a radio interface 305 with an aerial 306 for transmitting and receiving data to/from a wireless communications network, e.g. a cellular network. The electronic device further comprises a user interface 304, e.g. a display, such as an LCD, or the like, a keypad, or other input means, such as a touch screen, or the like. The user interface may be used during the loading process, if the loading is combined with an interactive authentication/approval procedure which requires an input from the user, e.g. the entering of a password, a PIN, or the like. The electronic device may further comprise a subscriber identity module (SIM) 307 including memory for storing subscriber identity information, a telephone number, and other data related to a user's subscription with a cellular network operator. The electronic device further comprises a storage medium 208 which may comprise a RAM section 303, a ROM section 302 and a section 301 comprising flash memory. The payload data received from the electronic device may be loaded in the flash section and/or the RAM section of the memory. Alternatively or additionally, the storage medium of the electronic device may comprise other types of memory, such as EPROM, EEPROM, or the like, or other types of storage media, such as optical disc, digital video disk (DVD), compact disc (CD or CD-ROM), mini-disc, hard disk, ferromagnetic memory, optical storage, charge coupled devices, PCMCIA cards, etc. Correspondingly, the received data may be loaded in any of the alternative memory types and/or storage media. In one embodiment of the invention, the data received from the loading station may be loaded into the memory of the SIM 307. Finally, the electronic device comprises a communications unit 206 as described above, e.g. a Bluetooth transceiver, an IrDa port, an USB adapter, a cable connector, or the like. Alternatively, the radio interface 305 may be used to receive the data over the air via a cellular network. For example, the electronic device may be any portable radio communication equipment, where the term portable radio communication equipment includes all equipment such as mobile telephones, pagers, communicators, i.e. electronic organisers, smart phones, personal digital assistants (PDAs), handheld computers, or the like.

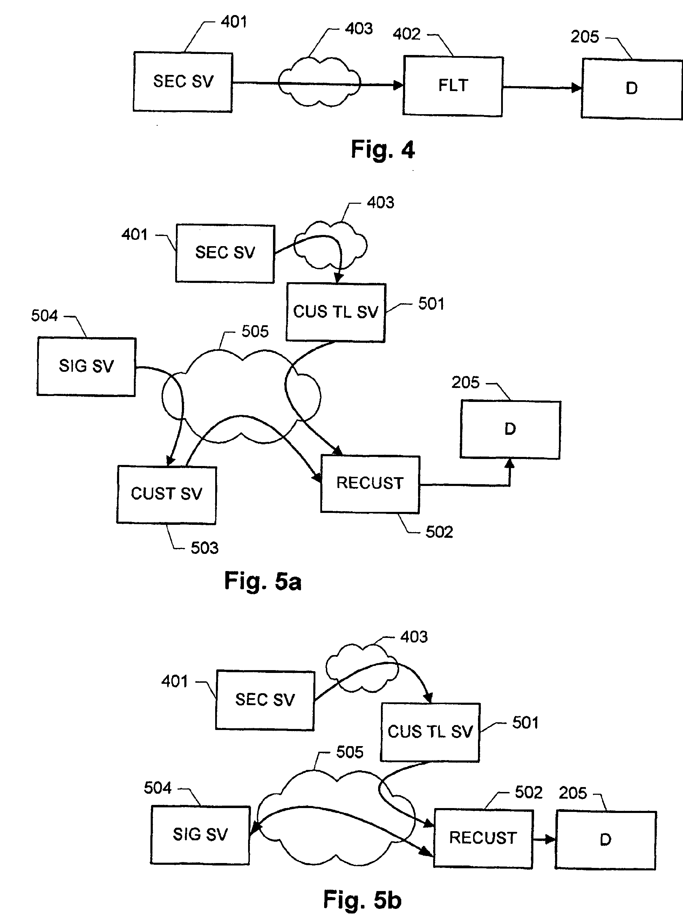

Fig. 4 shows a block diagram of a system for loading software and data into an electronic device and for customising an electronic device during the production process. The system comprises a security server 401 a factory loading station 402 and an electronic device 205. The security server 401 may be a personal computer, a work station, a network server, a web server, etc. The security server is connected to a computer network 403, e.g. the Internet, a local area network, an intranet, an extranet, etc. The loading station 402 is a computer with access to the computer network 403 and adapted to execute a computer program for loading software/data onto the electronic device 205, e.g. as described in connection with fig. 2.

The security server 401 is adapted to distribute computer programs and corresponding updates via the computer network 403 to the loading station 402 and, similarly, to other loading stations (not shown), i.e. computer programs to be run on the respective loading stations for customising and loading software/data into the electronic device 205 and corresponding other electronic devices (not shown). The security server 401 further distributes computer programs and data to be downloaded into the electronic devices by the loading stations and the security server may further provide additional services such as news, information, customer specific services, etc. Alternatively or additionally, the security server may distribute computer programs, data, etc., via any other suitable means, e.g. on a computer-readable medium such as a floppy disk, a CD ROM, etc. However, a connection via a computer network facilitates the implementation of automatic update mechanisms, version control mechanisms, etc.

The loading station 402 is adapted to provide security services related to the customisation of the electronic device 205 and the loading of software/data into the device 205. The security functions may include the generation of signatures based on the factory private key as described above, the generation of the permanent identifier, e.g. in connection with an IMEI, as described above. Further examples of such security services include security functions in connection with the communication between the loading station and the electronic device, such as calculation of checksums, cryptographic functions, compression, etc. In one embodiment where the electronic device includes a mobile terminal, the security functions may further comprise the generation and encryption of SIMlock codes or the like. The loading station further provides functionality for customising the software to be loaded into the electronic device, e.g. by providing language files, customer-specific software, games, etc.

Figs. 5a-b show block diagrams of embodiments of a system for re-customising an electronic device. As described in connection with fig. 1, the factory tools do not work anymore, once the electronic device has left the production process, i.e. one the factory public key has been replaced by a product public key. Instead, a special tool is used for reloading customisation files by a customer if necessary.

Fig. 5a shows a block diagram of an example of a system for re-customising an electronic device. The system comprises a security server 401 as described in connection with fig. 4, a customer tool server 501, a re-customisation station 502, a customer server 503, a signature server 504, and an electronic device 205 to be customised. The re-customisation station 502 is a specially adapted loading station which is connected to the electronic device 205 as described in connection with fig. 2. The customer tool server 501 may be a personal computer, a work station, a network server, a web server, etc. that is connected to the computer network 403. The customer tool server 501 receives computer programs, updates, etc. from the central security tool server 401, and makes them available for the customer-owned re-customisation tool 502. Hence, the re-customisation tool may automatically be updated from the customer tool server when connected to it.

The customer server 503 may be a fileserver in a computer network 505 of the customer, e.g. a local area network, and intranet, or the like. Alternatively, the customer server may be a web server providing access via the internet or another communications network. Any re-customisation files, e.g. comprising data, compiled computer programs, or the like, are stored in a predetermined location of the filesystem of the customer server 503. The system further comprises a signature server 504 connected to the computer network 505 and adapted to monitor the above location for files which are not provided with a corresponding signature. If such a file is found, the signature server 504 is adapted to sign that file with the product private key and store the signed file at the above or another predetermined location on the customer server 503. Subsequently, the re-customisation station 502 retrieves the signed file(s) from the customer-server and loads the file(s) into the electronic device after performing the security checks as described in connection with fig. 1.

Fig. 5b shows a block diagram of another example of a system for re-customising an electronic device. As the system of fig. 5a, the system of fig. 5b comprises a security server 401, a customer tool server 501, a re-customisation station 502, a signature server 504, and an electronic device 205 to be customised. According to this example, a client program is executed on the re-customisation station 502 which sends the re-customisation file(s) directly to the signature server 504. After signing the file(s), the signature server 504 returns the file(s) to the re-customisation station 502 which subsequently loads the file(s) into the electronic device after performing the security checks as described in connection with fig. 1.

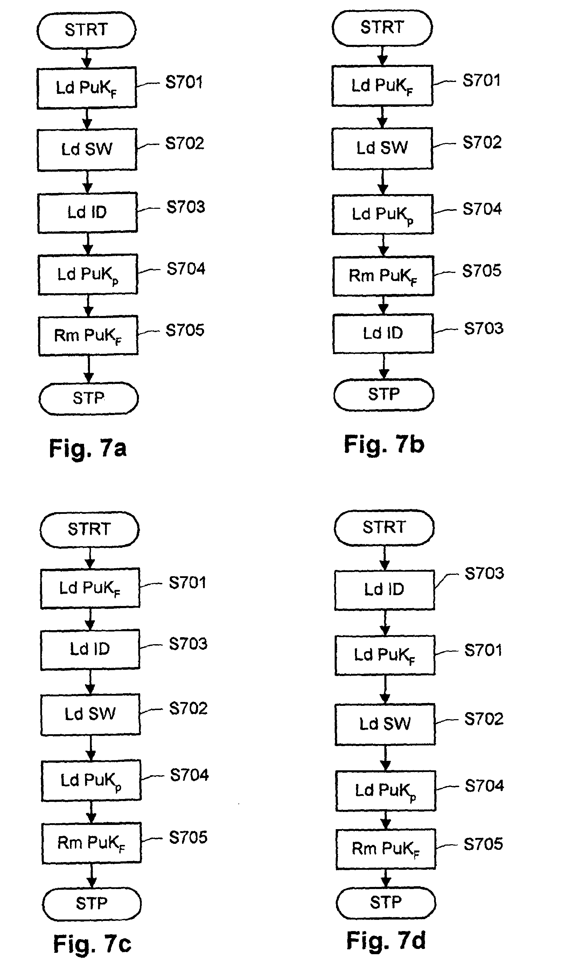

Fig. 6 shows a block diagram of a system for managing cryptographic keys and certificates. The system comprises a certificate management system 601, a certificate warehouse system 602, a signature server 504, and a loading system 603. The certificate management system 601 may comprise a suitably programmed personal computer, a work station, a network server, a web server, etc. and is connected to the certificate warehouse system 602 via a computer network, e.g. the Internet, a local area network, an intranet, an extranet, etc. The certificate management system 601 is adapted to authorise key signing, assign key identifiers to keys and to sign keys with a manufacturer root key of a hierarchical key structure in order to increase the security of the system.

The certificate warehouse system 602 may comprise a suitably programmed personal computer, a work station, a network server, a web server, etc. The certificate warehouse system 602 is adapted to generate pairs of public and private keys according to a suitable public key mechanism. The customer certificate warehouse system 602 further requests an authentication from the certificate management system and requests the generated public key to be signed with the manufacturer root key by the certificate management system 601. The signed public key is stored in the certificate warehouse system 602 and forwarded to the loading system 603. The loading system 603 loads the public key into the electronic device.

For example, in connection with product keys, the loading system is comprised in the production system for the electronic device and it loads the product public key at the end of the production process as described in connection with fig. 1. An example of an production system was described in connection with fig. 4 above.

Similarly, the factory keys and/or prototype keys can be distributed by a system according to fig. 6.

The generated private keys are stored in the customer certificate warehouse system 602, preferably in encrypted form, and transported to the signature server 504 via a secure channel.

Figs. 7a-d illustrate examples of production processes according to corresponding embodiments of the invention.

In the example of fig. 7a, the loading steps are performed in the order according to the example described in connection with fig. 1 above, i.e.
Step S701: Load factory public key.
Step S702: Load factory software.
Step S703: Load permanent ID.
Step S704: Load product public key.
Step S705: Disable factory public key.

In the example of fig. 7b, the permanent identifier is loaded at the end of the production process, i.e. the order of loading steps is
Step S701: Load factory public key.
Step S702: Load factory software.
Step S704: Load product public key.
Step S705: Disable factory public key.
Step S703: Load permanent ID.

It is noted that in connection with the loading step S4 as described in connection with fig. 1, the loading of the product public key included a verification that the permanent identifier was set. It is understood that in the example of fig. 7b, this verification is not applicable, as the permanent identifier is set after the loading of the product public key. It is further understood that a corresponding consideration applies to the following examples.

In the example of fig. 7c, the permanent identifier is loaded before loading the factory software, i.e. the order of loading steps is
Step S701: Load factory public key.
Step S703: Load permanent ID.
Step S702: Load factory software.
Step S704: Load product public key.
Step S705: Disable factory public key.

In the example of fig. 7d, the permanent identifier is loaded before loading the factory software, i.e. the order of loading steps is
Step S703: Load permanent ID.
Step S701: Load factory public key.
Step S702: Load factory software.
Step S704: Load product public key.
Step S705: Disable factory public key.

It is noted that in the above examples, alternatively, other orders of loading steps may be employed. For example, the steps S704 and S705 may be reversed, or combined in a single step, e.g. by overwriting the factory public key with the product public key.

Hence, in the above a production process for an electronic device has been disclosed which provides a high level of security.

It is understood that the production process according to the invention may be used in a number of different contexts. For example, it is a common problem for manufacturers of electronic devices that an increasing part of the software for the electronic devices is developed by third party companies. It is an advantage of the present invention that it provides a mechanism for controlling prototypes of an electronic device and ensuring that prototype software cannot run on a final product.

In one embodiment, during the production of prototype devices, the product public key loaded into the device at the end of the production process is a special public prototype key. Hence, a number of prototypes are produced having a public prototype key, thereby allowing a third party software developer to load software signed with a corresponding private prototype key. The signing of the software may be performed by the third party supplier or by the manufacturer. If there are more than one third party software developers, a corresponding number of different prototype key pairs may be used, thereby allowing the manufacturer to differentiate between different third party suppliers. Hence, according to the invention, a third party software supplier has the possibility to test the software in a realistic environment while, at the same time, ensuring that the software cannot be directly loaded into the final product, since the product devices are equipped with a product public key different from the prototype keys. Hence, without knowledge of the corresponding product private key, the third party supplier cannot load its software into the product.

A prototype public key may be related to a corresponding certificate, thereby providing a possibility of imposing a time limit on the validity of the prototype key.

In another embodiment, the prototype keys may be activated and/or deactivated by a command message sent to the electronic device over-the-air. For example, in the context of mobile terminals, a message of a short message service (SMS) may be sent to the mobile terminal, the message comprising a predetermined deactivation command and, preferably, a digital signature, e.g. in a message header. In the mobile terminal, the message is routed to a respective application which checks the signature and deactivates the mobile terminal for use as a prototype, e.g. by disabling the public prototype key or in another suitable manner.

Preferably, the digital signature corresponds to the prototype key in the mobile terminal, thereby ensuring that only the owner of the corresponding private prototype key may issue a valid deactivation message.

Furthermore, by using a time-stamp, e.g. included in the data to be signed, a re-use of a previously sent message can be prevented.

If the message includes a suitable device identifier, such as the IMEI of the mobile terminal, the message may be made specific for only one device.

## Claims

1. A method of producing an electronic device (101, 205) comprising a data memory (102) for storing data items and a key memory (105) for storing at least one cryptographic key of a cryptographic public key mechanism, the method comprising
- loading (S1, S701) a factory public key (PuK_{F}) into the key memory;
- loading (S2, S702) factory software (SW) signed with a factory private key (PrK_{F}) corresponding to the factory public key into the data memory;
**characterised in**
**that** the method further comprises
- loading (S4, S704) into the key memory a product public key (PuK_{P}) different from the factory public key for verifying subsequent data items to be loaded into the data memory after delivering the electronic device to a customer, the subsequent data items being signed with a corresponding product private key (PrK_{P}) ; and
- disabling (S705) the factory public key prior to delivering the electronic device to the customer.

2. A method according to claim 1, **characterised in that** the method further comprises the step (S3, S703) of setting a permanent identifier (ID) in the electronic device indicative of a completion of a production process.

3. A method according to claim 2, **characterised in that** the step of loading the factory public key comprises the steps of
- detecting whether the permanent identifier is set;
- if the permanent identifier is set, aborting the step of loading the factory public key; otherwise loading the factory public key.

4. A method according to claim 2 or 3, **characterised in that** the step of loading the product public key comprises the steps of
- detecting whether the permanent identifier is set;
- if the permanent identifier is set, loading the product public key; otherwise aborting the step of loading the product public key.

5. A method according to any one of claims 2 through 4, **characterised in that** the electronic device is a mobile telephone having associated with it an International Mobile Equipment Identity; and the permanent identifier comprises the International Mobile Equipment Identity and a further identifier stored in a one time programmable arrangement.

6. A method according to any one of claims 1 through 5, **characterised in that** the electronic device is for use in a mobile telephone.

7. A method according to any one of claims 1 through 6, **characterised in that** the data memory and the key memory comprise selected blocks of a flash memory.

8. A method according to any one of claims 1 through 7, **characterised in that** the method further comprises the step of loading a hash value (H(S)) of a secret data item (S) into the key memory.

9. A method according any one of claims 1 through 8, **characterised in that** the step of loading a product public key further comprises the step of loading a digital certificate comprising the product public key, the digital certificate being associated with a validity period limiting the validity of the public key.

10. A method according any one of claims 1 through 9, **characterised in that** the step of loading a product public key further comprises the step of loading a digital certificate comprising the product public key; and the method further comprises the step of subsequently invalidating the digital certificate by sending a predetermined message to the electronic equipment.

11. A method according to any one of claims 1 through 10, **characterised in that** the product public key is selected from a predetermined set of customer public keys.

12. A method according to claim 11, **characterised in that** the set of customer public keys comprises a prototype public key for use with prototypes of the electronic device.

13. A method of loading data into an electronic device produced according to the method of any one of claims 2 through 5, the method comprising the steps of
- detecting whether the permanent identifier is set; and
- if the permanent identifier is set, loading the data, the data being signed with the product private key; otherwise aborting loading the data.

14. A method of re-customising an electronic device produced according to the method of claim 8, the method comprising the steps of
- detecting whether the permanent identifier is set;
- obtaining the hash value (H(S)) of the secret data item (S) from the key memory (105);
- comparing the obtained hash value with a reference hash value calculated from a reference secret data item; and
- if the permanent identifier is set and if the obtained hash value corresponds to the calculated reference hash value, initiating loading re-customisation data signed with the product private key into the electronic device; otherwise aborting re-customising the electronic device.

15. A system for producing an electronic device, the electronic device comprising a data memory (102) for storing data items and a key memory (105) for storing at least one cryptographic key of a cryptographic public key mechanism, the system comprising
- a first loader module (106) for loading a factory public key (PuK_{F}) into the key memory;
- a second loader module (108) for loading factory software signed with a factory private key (PrK_{F}) corresponding to the factory public key into the data memory;
**characterised in**
**that** the system further comprises a third loader module (114) adapted
- to load into the key memory a product public key (PuK_{P}) different from the factory public key for verifying subsequent data items to be loaded into the data memory after delivering the electronic device to a customer, the subsequent data items being signed with a corresponding product private key (PrK_{P}), and
- to disable the factory public key prior to delivering the electronic device to the customer.

16. A system for loading data into an electronic device produced according to the method of any one of claims 2 through 5, the system comprising a loader module adapted to
- detect whether the permanent identifier is set; and
- if the permanent identifier is set, to load the data, the data being signed with the product private key; otherwise to abort loading the data.

17. A system for re-customising an electronic device produced according to the method of claim 8, the system comprising a loader module adapted
- to detect whether the permanent identifier is set;
- to obtain the hash value (H(S)) of the secret data item from the key memory;
- to compare the obtained hash value with a reference hash value calculated from a reference secret data item; and
- if the permanent identifier is set and if the obtained hash value corresponds to the calculated reference hash value, to initiate loading re-customisation data signed with the product private key into the electronic device; otherwise to abort re-customising the electronic device.

18. An electronic device comprising a data memory (102) for storing data items and a key memory (105) for storing at least one cryptographic key of a cryptographic public key mechanism, **characterised in that** the key memory has stored therein a product public key (PuK_{P}) different from a factory public key (PuK_{F}) for verifying subsequent data items to be loaded into the data memory after delivering the electronic device to a customer, the subsequent data items being signed with a corresponding product private key (PrK_{P}); and **in that** the key memory has further stored therein a hash value (H(S)) of a secret data item (S) for use in a subsequent secure re-customisation of the electronic device.

19. An electronic device according to claim 18, wherein the electronic device has further stored therein a permanent identifier (ID) indicative of a completion of a production process.

20. An electronic device according to claim 19, wherein the electronic device is a mobile telephone having associated with it an International Mobile Equipment Identity; and the permanent identifier comprises the International Mobile Equipment Identity and a further identifier stored in a one time programmable arrangement.

21. An electronic device according to any one of claims 18 through 20, **characterised in that** the electronic device is for use in a mobile telephone.

22. An electronic device according to any one of claims 18 through 21, **characterised in that** the data memory and the key memory comprise selected blocks of a flash memory.

23. An electronic device according to any one of claims 18 through 22, **characterised in that** the product public key is comprised in a digital certificate associated with a validity period limiting the validity of the public key.

24. A computer program comprising code means adapted to perform the following steps in a method of producing an electronic device including a data memory (102) for storing data items and a key memory (105) for storing at least one cryptographic key of a cryptographic public key mechanism:
- loading into the key memory a product public key (PuK_{P}) for verifying subsequent data items to be loaded into the data memory after delivering the electronic device to a customer, the subsequent data items being signed with a corresponding product private key; the product public key being different from a factory public key (PuK_{F}) stored in the key memory and used for verifying any factory software to be loaded into the data memory and signed with a factory private key corresponding to the factory public key; and
- disabling the factory public key prior to delivering the electronic device to the customer.

## Patentansprüche

1. Verfahren zum Herstellen einer elektronischen Einrichtung (101, 205), die einen Datenspeicher (102) zum Speichern von Datenelementen und einen Schlüsselspeicher (105) zum Speichern von zumindest einem kryptographischen Schlüssel eines kryptographischen öffentlichen Schlüsselmechanismus umfasst, wobei das Verfahren Folgendes umfasst:
- Laden (S1, S701) eines fabrikseitigen öffentlichen Schlüssels (PuK_{F}) in den Schlüsselspeicher;
- Laden (S2, S702) von fabrikseitiger Software (SW), die mit einem fabrikseitigen privaten Schlüssel (PrK_{F}) signiert ist, der mit dem fabrikseitigen öffentlichen Schlüssel korrespondiert, in den Datenspeicher;
**dadurch gekennzeichnet, dass**
das Verfahren ferner Folgendes umfasst:
- Laden (S4, S704) eines öffentlichen Produktschlüssels (PuK_{P}) In den Schlüsselspeicher, der sich von dem fabrikseitigen öffentlichen Schlüssel unterscheidet, zum Verifizieren nachfolgender Datenelemente, die in den Datenspeicher zu laden sind, nachdem die elektronische Einrichtung an einen Kunden geliefert wurde, wobei die nachfolgenden Datenelemente mit einem korrespondierenden privaten Produktschlüssel (PrK_{P}) signiert sind; und
- Deaktivieren (S705) des fabrikseitigen öffentlichen Schlüssels vor dem Liefern der elektronischen Einrichtung an den Kunden.

2. Verfahren nach Anspruch 1, **dadurch gekennzeichnet, dass** das Verfahren ferner den Schritt (S3, S703) des Setzens einer permanenten Kennung (ID) in der elektronischen Einrichtung, die auf einen Abschluss eines Herstellvorganges hinweist, umfasst.

3. Verfahren nach Anspruch 2, **dadurch gekennzeichnet, dass** der Schritt des Ladens des fabrikseitigen öffentlichen Schlüssels folgende Schritte umfasst:
- Detektieren, ob die permanente Kennung gesetzt ist;
- Abbrechen des Schrittes des Ladens des fabrikseitigen öffentlichen Schlüssels, falls die permanente Kennung gesetzt ist; andernfalls, Laden des fabrikseitigen öffentlichen Schlüssels.

4. Verfahren nach Anspruch 2 oder 3, **dadurch gekennzeichnet, dass** der Schritt des Ladens des öffentlichen Produktschlüssels folgende Schritte umfasst:
- Detektieren, ob die permanente Kennung gesetzt ist;
- Laden des öffentlichen Produktschlüssels, falls die permanente Kennung gesetzt ist; andernfalls, Abbrechen des Schrittes des Ladens des öffentlichen Produktschlüssels.

5. Verfahren nach einem der Ansprüche 2 bis 4, **dadurch gekennzeichnet, dass** die elektronische Einrichtung ein Mobiltelefon ist, dem eine internationale Mobilfunkgerätekennung zugeordnet ist, und die permanente Kennung die internationale Mobilfunkgerätekennung und eine weitere Kennung umfasst, die in einer einmal programmierbaren Anordnung gespeichert sind.

6. Verfahren nach einem der Ansprüche 1 bis 5, **dadurch gekennzeichnet, dass** die elektronische Einrichtung zur Verwendung in einem Mobiltelefon vorgesehen ist.

7. Verfahren nach einem der Ansprüche 1 bis 6, **dadurch gekennzeichnet, dass** der Datenspeicher und der Schlüsselspeicher ausgewählte Blöcke eines Flash-Speichers umfassen.

8. Verfahren nach einem der Ansprüche 1 bis 7, **dadurch gekennzeichnet, dass** das Verfahren ferner den Schritt des Ladens eines Hash-Wertes (H(S)) eines geheimen Datenelementes (S) in den Schlüsselspeicher umfasst.

9. Verfahren nach einem der Ansprüche 1 bis 8, **dadurch gekennzeichnet, dass** der Schritt des Ladens eines öffentlichen Produktschlüssels ferner den Schritt des Ladens eines digitalen Zertifikates umfasst, das den öffentlichen Produktschlüssel umfasst, wobei dem digitalen Zertifikat ein Gültigkeitszeitraum zugeordnet ist, der die Gültigkeit des öffentlichen Schlüssels beschränkt.

10. Verfahren nach einem der Ansprüche 1 bis 9, **dadurch gekennzeichnet, dass** der Schritt des Ladens eines öffentlichen Produktschlüssels ferner den Schritt des Ladens eines digitalen Zertifikates umfasst, das den öffentlichen Produktschlüssel umfasst, und dass das Verfahren ferner den Schritt des nachfolgend als ungültig Erklärens des digitalen Zertifikates durch Senden einer vorbestimmten Nachricht an die elektronische Einrichtung umfasst.

11. Verfahren nach einem der Ansprüche 1 bis 10, **dadurch gekennzeichnet, dass** der öffentliche Produktschlüssel aus einem vorbestimmten Satz von öffentlichen Kundenschlüsseln ausgewählt wird.

12. Verfahren nach Anspruch 11, **dadurch gekennzeichnet, dass** der Satz von öffentlichen Kundenschlüsseln einen öffentlichen Prototypschlüssel zur Verwendung bei Prototypen der elektronischen Einrichtung umfasst.

13. Verfahren zum Laden von Daten in eine elektronische Einrichtung, die gemäß dem Verfahren nach einem der Ansprüche 2 bis 5 hergestellt ist, wobei das Verfahren folgende Schritte umfasst:
- Detektieren, ob die permanente Kennung gesetzt ist; und
- Laden der Daten, falls die permanente Kennung gesetzt ist, wobei die Daten mit dem privaten Produktschlüssel signiert sind; andernfalls, Abrechen des Ladens der Daten.

14. Verfahren zum Wiederanpassen einer elektronischen Einrichtung, die gemäß dem Verfahren nach Anspruch 8 hergestellt ist, wobei das Verfahren folgende Schritte umfasst:
- Detektieren, ob die permanente Kennung gesetzt ist;
- Beziehen des Hash-Wertes (H(S)) des geheimen Datenelementes (S) aus dem Schlüsselspeicher (105);
- Vergleichen des bezogenen Hash-Wertes mit einem Referenz-Hash-Wert, der aus einem geheimen Referenzdatenelement berechnet ist; und
- Beginnen des Ladens von Wiederanpassungsdaten, die mit dem privaten Produktschlüssel signiert sind, in die elektronische Einrichtung, falls die permanente Kennung gesetzt ist und falls der bezogene Hash-Wert mit dem berechneten Referenz-Hash-Wert korrespondiert; andernfalls, Abbrechen des Wiederanpassens der elektronischen Einrichtung.

15. System zum Herstellen einer elektronischen Einrichtung, wobei die elektronische Einrichtung einen Datenspeicher (102) zum Speichern von Datenelementen und einen Schlüsselspeicher (105) zum Speichern von zumindest einem kryptographischen Schlüssel eines kryptographischen öffentlichen Schlüsselmechanismus umfasst, wobei das System umfasst:
- ein erstes Lademodul (106) zum Laden eines fabrikseitigen öffentlichen Schlüssels (PuK_{F}) in den Schlüsselspeicher;
- ein zweites Lademodul (108) zum Laden von fabrikseitiger Software, die mit einem fabrikseitigen privaten Schlüssel (PrK_{F}) signiert ist, der mit dem fabrikseitigen öffentlichen Schlüssel korrespondiert, in den Datenspeicher;
**dadurch gekennzeichnet, dass**
das System ferner ein drittes Lademodul (114) umfasst, das ausgelegt ist zum
- Laden eines öffentlichen Produktschlüssels (PuK_{P}) in den Schlüsselspeicher, der sich von dem fabrikseitigen öffentlichen Schlüssel unterscheidet, zum Verifizieren nachfolgender Datenelemente, die in den Datenspeicher zu laden sind, nachdem die elektronische Einrichtung an einen Kunden geliefert wurde, wobei die nachfolgenden Datenelemente mit einem korrespondierenden privaten Produktschlüssel (PrK_{P}) signiert sind; und
- Deaktivieren des fabrikseitigen öffentlichen Schlüssels vor dem Liefern der elektronischen Einrichtung an den Kunden.

16. System zum Laden von Daten in eine elektronische Einrichtung, die gemäß dem Verfahren nach einem der Ansprüche 2 bis 5 hergestellt ist, wobei das System ein Lademodul umfasst, das ausgelegt ist zum
- Detektieren, ob die permanente Kennung gesetzt ist; und
- Laden der Daten, falls die permanente Kennung gesetzt ist, wobei die Daten mit dem privaten Produktschlüssel signiert sind; andernfalls, zum Abrechen des Ladens der Daten.

17. System zum Wiederanpassen einer elektronischen Einrichtung, die gemäß dem Verfahren nach Anspruch 8 hergestellt ist, wobei das System ein Lademodul umfasst, das ausgelegt ist zum
- Detektieren, ob die permanente Kennung gesetzt ist;
- Beziehen des Hash-Wertes (H(S)) des geheimen Datenelementes von dem Schlüsselspeicher;
- Vergleichen des bezogenen Hash-Wertes mit einem Referenz-Hash-Wert, der aus einem geheimen Referenzdatenelement berechnet ist; und
- Beginnen des Ladens von Wiederanpassungsdaten, die mit dem privaten Produktschlüssel signiert sind, in die elektronische Einrichtung, falls die permanente Kennung gesetzt ist und falls der bezogene Hash-Wert mit dem berechneten Referenz-Hash-Wert korrespondiert; andernfalls, zum Abrechen des Wiederanpassens der elektronischen Einrichtung.

18. Elektronische Einrichtung, die einen Datenspeicher (102) zum Speichern von Datenelementen und einen Schlüsselspeicher (105) zum Speichern von zumindest einem kryptographischen Schlüssel eines kryptographischen öffentlichen Schlüsselmechanismus umfasst, **dadurch gekennzeichnet, dass** der Schlüsselspeicher darin einen öffentlichen Produktschlüssel (PuKp), der sich von einem fabrikseitigen öffentlichen Schlüssel (PuK_{F}) unterscheidet, gespeichert hat, zum Verifizieren von nachfolgenden Datenelementen, die in den Datenspeicher zu laden sind, nachdem die elektronische Einrichtung an einen Kunden geliefert wurde, wobei die nachfolgenden Datenelemente mit einem korrespondierenden privaten Produktschlüssel (PrK_{P}) signiert sind, und **dadurch**, dass der Schlüsselspeicher darin ferner einen Hash-Wert (H(S)) eines geheimen Datenelementes (S) zur Verwendung bei einer nachfolgenden sicheren Wiederanpassung der elektronischen Einrichtung gespeichert hat.

19. Elektronische Einrichtung nach Anspruch 18, wobei die elektronische Einrichtung darin ferner eine permanente Kennung (ID) gespeichert hat, die auf einen Abschluss eines Herstellungsvorganges hinweist.

20. Elektronische Einrichtung nach Anspruch 19, wobei die elektronische Einrichtung ein Mobiltelefon ist, dem eine internationale Mobilfunkgerätekennung zugeordnet ist, und die permanente Kennung die internationale Mobilfunkgerätekennung und eine weitere Kennung umfasst, die in einer einmalig programmierbaren Anordnung gespeichert sind.

21. Elektronische Einrichtung nach einem der Ansprüche 18 bis 20, **dadurch gekennzeichnet, dass** die elektronische Einrichtung zur Verwendung in einem Mobiltelefon vorgesehen ist.

22. Elektronische Einrichtung nach einem der Ansprüche 18 bis 21, **dadurch gekennzeichnet, dass** der Datenspeicher und der Schlüsselspeicher ausgewählte Blöcke eines Flash-Speichers umfassen.

23. Elektronische Einrichtung nach einem der Ansprüche 18 bis 22, **dadurch gekennzeichnet, dass** der öffentliche Produktschlüssel in einem digitalen Zertifikat enthalten ist, dem ein Gültigkeitszeitraum zugeordnet ist, der die Gültigkeit des öffentlichen Schlüssels beschränkt.

24. Computerprogramm, das Codemittel umfasst, die ausgelegt sind zum Durchführen der folgenden Schritte in einem Verfahren zum Herstellen einer elektronischen Einrichtung, die einen Datenspeicher (102) zum Speichern von Datenelementen und einen Schlüsselspeicher (105) zum Speichern von zumindest einem kryptographischen Schlüssel eines kryptographischen öffentlichen Schlüsselmechanismus umfasst:
- Laden eines öffentlichen Produktschlüssels (PuKp) in den Schlüsselspeicher zum Verifizieren nachfolgender Datenelemente, die in den Datenspeicher zu laden sind, nachdem die elektronische Einrichtung an einen Kunden geliefert wurde, wobei die nachfolgenden Datenelemente mit einem korrespondierenden privaten Produktschlüssel signiert sind, wobei sich der öffentliche Produktschlüssel von einem fabrikseitigen öffentlichen Schlüssel (PuK_{F}) unterscheidet, der in dem Schlüsselspeicher gespeichert ist und zum Verifizieren jeglicher fabrikseitiger Software, die in den Datenspeicher zu laden ist und die mit einem fabrikseitigen privaten Schlüssel signiert ist, der mit dem fabrikseitigen öffentlichen Schlüssel korrespondiert, verwendet wird; und
- Deaktivieren des fabrikseitigen öffentlichen Schlüssels vor dem Liefern der elektronischen Einrichtung an den Kunden.

## Revendications

1. Procédé de production d'un dispositif électronique (101, 205) comprenant une mémoire de données (102) destinée à stocker des éléments de données et une mémoire de clefs (105) destiné à stocker au moins une clef cryptographique d'un mécanisme cryptographique à clef publique, le procédé comprenant les étapes consistant à :
- charger (S1, S701) une clef publique d'usine (PuK_{F}) dans la mémoire de clefs ;
- charger (S2, S702) dans la mémoire de données un logiciel d'usine (SW) signé à l'aide d'une clef privée d'usine (PrK_{F}) correspondant à la clef publique d'usine ;
**caractérisé en ce que**
le procédé comprend en outre les étapes consistant à :
- charger (S4, S704) dans la mémoire de clefs une clef publique de produit (PuK_{P}) différente de la clef publique d'usine afin de vérifier des éléments de données futurs à charger dans la mémoire de données après la livraison du dispositif électronique à un client, les éléments de données futurs étant signés à l'aide d'une clef privée de produit (PrKp) correspondante ; et
- inhiber (S705) la clef publique d'usine avant la livraison du dispositif électronique au client.

2. Procédé selon la revendication 1, **caractérisé en ce que** le procédé comprend en outre l'étape (S3, S703) consistant à renseigner dans le dispositif électronique un identificateur permanent (ID) qui indique l'achèvement d'un processus de production.

3. Procédé selon la revendication 2, **caractérisé en ce que** l'étape de chargement de la clef publique d'usine comprend les étapes consistant à :
- détecter si l'identificateur permanent est renseigné ;
- si l'identificateur permanent est renseigné, abandonner l'étape de chargement de la clef publique d'usine ; sinon, charger la clef publique d'usine.

4. Procédé selon la revendication 2 ou 3, **caractérisé en ce que** l'étape de chargement de la clef publique de produit comprend les étapes consistant à :
- détecter si l'identificateur permanent est renseigné ;
- si l'identificateur permanent est renseigné, charger la clef publique de produit ; sinon, abandonner l'étape de chargement de la clef publique de produit.

5. Procédé selon l'une quelconque des revendications 2 à 4, **caractérisé en ce que** le dispositif électronique est un téléphone mobile associé à une identité internationale d'équipement mobile et **en ce que** l'identificateur permanent comprend l'identité internationale d'équipement mobile et un autre identificateur stocké dans un agencement programmable une seule fois.

6. Procédé selon l'une quelconque des revendications 1 à 5, **caractérisé en ce que** le dispositif électronique est destiné à être utilisé dans un téléphone mobile.

7. Procédé selon l'une quelconque des revendications 1 à 6, **caractérisé en ce que** la mémoire de données et la mémoire de clefs comprennent des blocs sélectionnés d'une mémoire flash.

8. Procédé selon l'une quelconque des revendications 1 à 7, **caractérisé en ce que** le procédé comprend en outre l'étape de chargement d'une valeur de hachage (H(S)) d'un élément de données secret (S) dans la mémoire de clefs.

9. Procédé selon l'une quelconque des revendications 1 à 8, **caractérisé en ce que** l'étape de chargement d'une clef publique de produit comprend en outre l'étape consistant à charger un certificat numérique comprenant la clef publique de produit, le certificat numérique étant associé à une période de validité qui limite la validité de la clef publique.

10. Procédé selon l'une quelconque des revendications 1 à 9, **caractérisé en ce que** l'étape de chargement d'une clef publique de produit comprend l'étape consistant à charger un certificat numérique comprenant la clef publique de produit et **en ce que** le procédé comprend en outre l'étape consistant à invalider ensuite le certificat numérique en envoyant un message prédéterminé à l'équipement électronique.

11. Procédé selon l'une quelconque des revendications 1 à 10, **caractérisé en ce que** la clef publique de produit est sélectionné dans un ensemble prédéterminé de clefs publiques de clients.

12. Procédé selon la revendication 11, **caractérisé en ce que** l'ensemble de clefs publiques de clients comprend une clef publique de prototype destinée à être utilisée avec des prototypes du dispositif électronique.

13. Procédé de chargement de données dans un dispositif électronique produit conformément au procédé selon l'une quelconque des revendications 2 à 5, le procédé comprenant les étapes consistant à :
- détecter si l'identificateur permanent est renseigné ; et
- si l'identificateur permanent est renseigné, charger les données, les données étant signées à l'aide de la clef privée de produit ; sinon abandonner le chargement des données.

14. Procédé de repersonnalisation d'un dispositif électronique produit conformément au procédé selon la revendications 8, le procédé comprenant les étapes consistant à :
- détecter si l'identificateur permanent est renseigné ;
- obtenir de la mémoire de clefs (105) la valeur de hachage (H(S)) de l'élément de données secret (S) ;
- comparer la valeur de hachage obtenue et une valeur de hachage de référence calculée à partir d'un élément de données secret de référence ; et
- si l'identificateur permanent est renseigné et si la valeur de hachage obtenue correspond à la valeur de hachage de référence calculée, lancer le chargement de données de repersonnalisation signées à l'aide de la clef privée de produit dans le dispositif électronique ; sinon, abandonner la repersonnalisation du dispositif électronique.

15. Système de production d'un dispositif électronique, le dispositif électronique comprenant une mémoire de données (102) destinée à stocker des éléments de données et une mémoire de clefs (105) destiné à stocker au moins une clef cryptographique d'un mécanisme cryptographique à clef publique, le système comprenant :
- un premier module de chargement (106) destiné à charger une clef publique d'usine (PuK_{F}) dans la mémoire de clefs ;
- un deuxième module de chargement (108) destiné à charger dans la mémoire de données un logiciel d'usine signé à l'aide d'une clef privée d'usine (PrK_{F}) correspondant à la clef publique d'usine ;
**caractérisé en ce que** le système comprend en outre un troisième module de chargement (114) adapté pour :
- charger dans la mémoire de clefs une clef publique de produit (PuKp) différente de la clef publique d'usine afin de vérifier des éléments de données futurs à charger dans la mémoire de données après la livraison du dispositif électronique à un client, les éléments de données futurs étant signés à l'aide d'une clef privée de produit (PrK_{P}) correspondante ; et
- inhiber la clef publique d'usine avant la livraison du dispositif électronique au client.

16. Système de chargement de données dans un dispositif électronique produit conformément au procédé selon l'une quelconque des revendication 2 à 5, le système comprenant un module de chargement adapté pour :
- détecter si l'identificateur permanent est renseigné ;
- si l'identificateur permanent est renseigné, charger les données, les données étant signées à l'aide de la clef privée de produit ; sinon, abandonner le chargement des données.

17. Système de repersonnalisation d'un dispositif électronique produit conformément au procédé selon la revendication 8, le système comprenant un module de chargement adapté pour :
- détecter si l'identificateur permanent est renseigné ;
- obtenir de la mémoire de clefs la valeur de hachage (H(S)) de l'élément de données secret ;
- comparer la valeur de hachage obtenue et une valeur de hachage de référence calculée à partir d'un élément de données secret de référence ; et
- si l'identificateur permanent est renseigné et si la valeur de hachage obtenue correspond à la valeur de hachage de référence calculée, lancer le chargement de données de repersonnalisation signées à l'aide de la clef privée de produit dans le dispositif électronique ; sinon, abandonner la repersonnalisation du dispositif électronique.

18. Dispositif électronique comprenant une mémoire de données (102) destinée à stocker des éléments de données et une mémoire de clefs (105) destiné à stocker au moins une clef cryptographique d'un mécanisme cryptographique à clef publique, **caractérisé en ce que** la mémoire de clefs stocke une clef publique de produit (PuK_{P}) différente d'une clef publique d'usine (PuK_{F}) destinée à vérifier des éléments de données futurs à charger dans la mémoire de données après la livraison du dispositif électronique à un client, les éléments de données futurs étant signés à l'aide d'une clef privée de produit (PrK_{P}) correspondante ; et **en ce que** la mémoire de clefs stocke en outre une valeur de hachage (H(S)) d'un élément de données secret (S) destiné à être utilisé dans une repersonnalisation sécurisée ultérieure du dispositif électronique.

19. Dispositif électronique selon la revendication 18, le dispositif électronique stockant en outre un identificateur permanent (ID) qui indique l'achèvement d'un processus de production.

20. Dispositif électronique selon la revendication 19, dans lequel le dispositif électronique est un téléphone mobile associé à une identité internationale d'équipement mobile et l'identificateur permanent comprend l'identité internationale d'équipement mobile et un autre identificateur stocké dans un agencement programmable une seule fois.

21. Dispositif électronique selon l'une quelconque des revendications 18 à 20, **caractérisé en ce que** le dispositif électronique est destiné à être utilisé dans un téléphone mobile.

22. Dispositif électronique selon l'une quelconque des revendications 18 à 21, **caractérisé en ce que** la mémoire de données et la mémoire de clefs comprennent des blocs sélectionnés d'une mémoire flash.

23. Dispositif électronique selon l'une quelconque des revendications 18 à 22, **caractérisé en ce** la clef publique de produit est comprise dans un certificat numérique associé à une période de validité qui limite la validité de la clef publique.

24. Programme d'ordinateur comprenant un moyen de code adapté pour exécuter les étapes suivantes dans un procédé de production d'un dispositif électronique comprenant une mémoire de données (102) destinée à stocker des éléments de données et une mémoire de clefs (105) destiné à stocker au moins une clef cryptographique d'un mécanisme cryptographique à clef publique :
- charger dans la mémoire de clefs une clef publique de produit (PuK_{P}) afin de vérifier des éléments de données futurs à charger dans la mémoire de données après la livraison du dispositif électronique à un client, les éléments de données futurs étant signés à l'aide d'une clef privée de produit correspondante ; la clef publique de produit étant différente d'une clef publique d'usine (PuK_{F}) stockée dans la mémoire de clefs et utilisée pour vérifier des logiciels d'usine à charger dans la mémoire de données et signées à l'aide d'une clef privée d'usine correspondant à la clef publique d'usine ; et
- inhiber la clef publique d'usine avant la livraison du dispositif électronique au client.
